# EUROPEAN PATENT SPECIFICATION

(11) **EP 3 759 593 B1**
(45) Date of publication and mention of the grant of the patent: **17.05.2023**
(21) Application number: 19708377.7
(22) Date of filing: 11.02.2019
(51) Int. Cl.: G06F 9/30

(54) **PACK AND UNPACK NETWORK AND METHOD FOR VARIABLE BIT WIDTH DATA FORMATS**
PACKUNGS- UND ENTPACKUNGSNETZWERK UND VERFAHREN FÜR DATENFORMATE MIT VARIABLER BITBREITE
RÉSEAU ET PROCÉDÉ DE GROUPAGE ET DE DÉGROUPAGE POUR FORMATS DE DONNÉES À LARGEUR DE BIT VARIABLE

(30) Priority: 01.03.2018 US 201815909942
(43) Date of publication of application: 06.01.2021
(73) Proprietor: QUALCOMM INCORPORATED, San Diego, California 92121-1714 (US)
(72) Inventor: INGLE, Ajay, San Diego, California 92121 (US); KULKARNI, Saurabh, San Diego, California 92121 (US); BAHN, Jun Ho, San Diego, California 92121 (US)
(74) Representative: Klang, Alexander H.
(86) International application number: PCT/US2019/017440
(87) International publication number: WO 2019/168657

(56) References cited:
- EP-A1- 2 950 202
- WO-A1-2008/126041
- WO-A1-2015/116474
- WO-A2-2007/103195
- GB-A- 2 409 064
- US-A1- 2009 037 694
- US-A1- 2014 013 076
- US-B1- 6 173 366

## Description

### Claim of Priority

The present Application for Patent claims priority to Application No. 15/909,942 entitled "SINGLE PACK & UNPACK NETWORK AND METHOD FOR VARIABLE BIT WIDTH DATA FORMATS FOR COMPUTATIONAL MACHINES" filed March 1, 2018.

### Field

The present disclosure relates generally to bit pack and unpack networks, and more specifically to methods and apparatus for providing a network employing single or unitary packing and unpacking network.

### Introduction

In computing devices, the ability to effectively and accurately accommodate variable data width formats for computational and memory storage datapaths is becoming increasingly important in processing operations such as Digital Signal Processing (DSP)/Modem Processing, as well as for Central Processing Units (CPUs) and Graphics Processing Units (GPUs). The nature of processing is such that the bit width can vary at every step of the processing. Being able to accurately match the bit width with an algorithm processing step or application is important to provide enough data bit width to ensure precision and dynamic range, while also ensuring that the cost is minimized by not provide too much bit width. In the case of memory storage datapaths in storage during processing, in particular, it is noted that having a data bit width match a needed signal-to-noise ratio (SNR) delivers the ability to provide maximum storage density. That is, wider than needed bit widths will result in extra memory and cost, while lower than needed bit widths will degrade the SNR performance.

Known ways of accommodating variable bit widths in computational or memory storage datapaths to compress bits and avoid sparse memory storage include implementing the packing/unpacking of each data width data via a dedicated per data width network or some group of width multiples networks, which results in higher cost, area, and power, as well as suffering higher latency. Accordingly, a need exists to effectively and accurately match bit width to an algorithm or application with packing and unpacking that minimizes cost, area, and power, as well as decreasing or minimizing latency.

Attention is drawn to the document GB 2 409 064 A, which describes a data processing apparatus and method for performing in parallel a data processing operation on data elements. The data processing apparatus comprises a register data store having a plurality of registers operable to store data elements, and processing logic operable to perform data processing operations on data elements. A decoder is operable to decode a data processing instruction, the data processing instruction identifying a lane size and a data element size, the lane size being a multiple of the data element size. Further, the decoder is operable to control the processing logic to define based on the lane size a number of lanes of parallel processing in at least one of the registers, and the processing logic is operable to perform in parallel a data processing operation on the data elements within each lane of parallel processing.

Further attention is drawn to the document US 2014/013076 A1. It describes a method and apparatus for efficiently processing data in various formats in a single instruction multiple data ("SIMD") architecture. Specifically, a method to unpack a fixed-width bit values in a bit stream to a fixed width byte stream in a SIMD architecture is presented. A method to unpack variable-length byte packed values in a byte stream in a SIMD architecture is presented. A method to decompress a run length encoded compressed bit-vector in a SIMD architecture is presented. A method to return the offset of each bit set to one in a bit-vector in a SIMD architecture is presented. A method to fetch bits from a bit-vector at specified offsets relative to a base in a SIMD architecture is presented. A method to compare values stored in two SIMD registers is presented.

### SUMMARY

In accordance with the present invention, an apparatus and a method as set forth in the independent claims is provided. Embodiments of the invention are claimed in the dependent claims.

According to an aspect, the present disclosure provides an apparatus configured for bit packing data having various bit widths in a computer system. The disclosed apparatus includes a first plurality of bit locations in the computer system, with the first plurality of bit locations each having a predetermined number of bit slots and temporarily storing one or more bits in respective slots of the predetermined number of bit slots, and the predetermined number of bits corresponding to one of a number of different data bit widths. Additionally, the apparatus includes a fixed bit packing network configured to pack data bits of a number of different bit widths from the first plurality of bit locations to a second plurality of bit locations in the computer system, wherein the network is configured to pack bits stored in a same bit slot position in respective bit locations of the first plurality of bit locations by routing the bits into bit slots of a same bit location in the second plurality of bit locations to form bit bundles in respective ones of the second plurality of bit locations.

According to another aspect, the present disclosure provides a method of operating a computational circuitry is disclosed. The method includes storing one or more bits in at least one of a first plurality of bit locations each having a predetermined number of bit slots and configured to temporarily store the one or more bits in respective slots of the predetermined number of bit slots, with the predetermined number of bits corresponding to one of a number of different data bit widths. The method further includes packing bits to a second plurality of bit locations, the packing utilizing a fixed bit packing network configured to pack data bits of a number of different bit widths from the first plurality of bit locations to the second plurality of bit locations, wherein the network is configured to transmit bits stored in bit slot positions in respective bit locations of the first plurality of bit locations into bit slots of a same bit location in the second plurality of bit locations to form bit bundles in respective ones of the second plurality of bit locations.

According to yet another aspect, the present disclosure provides an apparatus configured for bit packing data having various bit widths in a computer system is disclosed. The apparatus includes means for storing one or more bits in at least one of a first plurality of bit locations each having a predetermined number of bit slots in the bit locations and configured to temporarily store the one or more bits in respective slots of the predetermined number of bit slots, the predetermined number of bits corresponding to one of a number of different data bit widths. Additionally, the apparatus incudes means for packing bits to a second plurality of bit locations, the packing utilizing a fixed bit packing network configured to pack data bits of a number of different bit widths from the first plurality of bit locations to the second plurality of bit locations, wherein the network is configured to route bits stored in a bit slot positions in respective bit locations of the first plurality of bit locations into bit slots of a same bit location in the second plurality of bit locations to form bit bundles in respective ones of the second plurality of bit locations.

According to yet one further aspect, the present disclosure provides an apparatus for bit packing in a computer system is disclosed including processing circuitry that is configured for storing one or more bits in at least one of a first plurality of bit locations each having a predetermined number of bit slots in the bit locations and configured to temporarily store the one or more bits in respective slots of the predetermined number of bit slots, the predetermined number of bits corresponding to one of a number of different data bit widths. Furthermore, the processing circuitry is configured for packing bits to a second plurality of bit locations, the packing utilizing a fixed bit packing network configured to pack data bits of a number of different bit widths from the first plurality of bit locations to the second plurality of bit locations, wherein the network is configured to transmit bits stored in a bit slot positions in respective bit locations of the first plurality of bit locations into bit slots of a same bit location in the second plurality of bit locations to form bit bundles in respective ones of the second plurality of bit locations.

### BRIEF DESCRIPTION OF THE DRAWINGS

FIG. 1 illustrates an exemplary computational system consisting of an apparatus in which the present methods and apparatus may be employed.
FIG. 2 illustrates an exemplary processing system in which the presently disclosed bit pack/unpack network may be implemented.
FIGs. 3 and 4 illustrate a bit packing network scheme that implements the packing and unpacking of data bits for varying data bit widths.
FIG. 5 and 6 illustrate a bit packing network scheme that implements the packing and unpacking of data bits for varying data bit widths using a single or unitary pack network in accordance with concepts of the present invention.
FIG. 7 illustrates a flow diagram of a method for providing and operating a computational circuitry including a single bit pack network in accordance with aspects of the present disclosure.
FIG. 8 illustrates an example of an apparatus employing a processing circuit that may be adapted according to certain aspects disclosed herein.

### DETAILED DESCRIPTION

The present disclosure provides methods and apparatus for providing a single or unitary pack and unpack network in computational paths such as Single instruction, multiple data (SIMD) computation for handling variable data widths. The use of a single pack and unpack network provides faster access, reduced cost and area, and power optimization.

It is noted here at the outset, that the word "exemplary" is used herein to mean "serving as an example, instance, or illustration." Any example or aspect described herein as "exemplary" is not necessarily to be construed as preferred or advantageous over other examples or aspects.

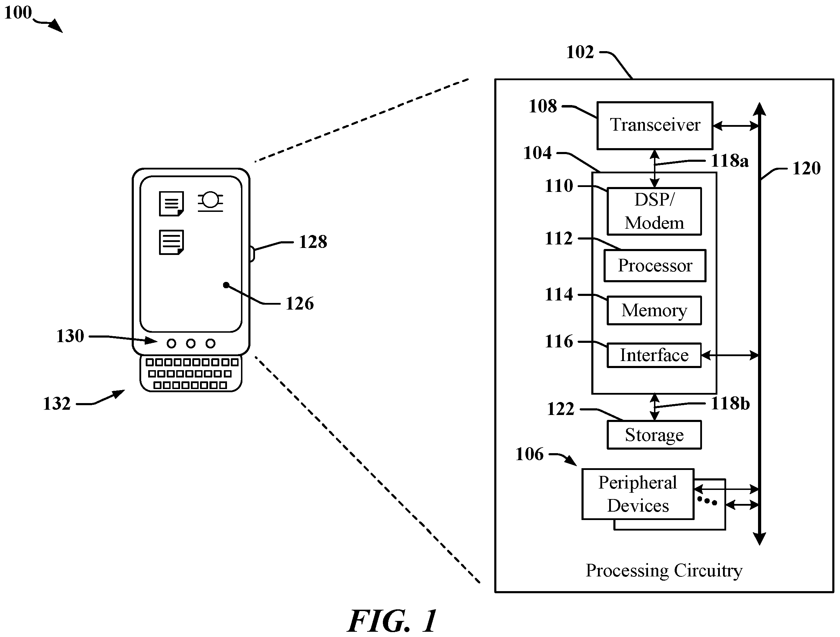

As an example for contextualization of the present methods and apparatus, but not by way of limitation, FIG. 1 illustrates an exemplary computational system consisting of an apparatus 100 in which the present methods and apparatus may be employed. The apparatus 100 may include a processing circuitry 102 having multiple circuits or devices 104, 106, and/or 108, which may be implemented in one or more processing circuits such as in an application specific integrated circuit (ASIC) or in a System on a Chip (SoC) as examples. The apparatus 100 may be a communication device and the processing circuitry 102 may include one or more peripheral devices 106, and a transceiver 108 that enables the apparatus to communicate with a radio access network, a core access network, the Internet, and/or another communication network. In an aspect, apparatus 100 may constitute a cell phone or a mobile computing device (such as a laptop or an Internet of Things (IoT) device).

The circuitry 104 may include one or more processors 112, one or more DSPs/modems 110, on-board memory 114, a bus interface circuit 116, and/or other logic circuits or functions. The processing circuit 102 may be controlled by an operating system that may provide an application programming interface (API) layer that enables the one or more processors 112 to execute software modules residing in the on-board memory 114 or other processor-readable storage 122 provided on the processing circuit 102. The software modules may include instructions and data stored in the on-board memory 114 or processor-readable storage 122. The ASIC 104 may access its on-board memory 114, the processor-readable storage 122, and/or storage external to the processing circuit 102. The on-board memory 114 may include one or more of read-only memory (ROM), random-access memory (RAM), electrically erasable programmable ROM (EEPROM), flash or non-volatile memory, or any memory device that can be used in processing systems and computing platforms. The processing circuit 102 may include, implement, or have access to a local database or other parameter storage that can maintain operational parameters and other information used to configure and operate the apparatus 100 and/or the processing circuit 102. The local database may be implemented using registers, a database module, non-volatile or flash memory, magnetic media, EEPROM, soft or hard disk, or the like. The processing circuit 102 may also be operably coupled to external devices such as a display 126, operator controls, such as switches or buttons 128, 130, and/or an integrated or external keypad 132, among other components. A user interface module may be configured to operate with the display 126, keypad 132, etc. through a dedicated communication link or through one or more serial data interconnects.

The processing circuit 102 may also include one or more buses 118a, 118b, 120 that enable certain circuitry or devices 104, 106, and/or 108 to communicate. In one example, the circuitry 104 may include a bus interface circuit 116 that includes a combination of circuits, counters, timers, control logic, and other configurable circuits or modules. In one example, the bus interface circuit 116 may be configured to operate in accordance with communication specifications or protocols. The processing circuit 102 may include or control a power management function that configures and manages the operation of the apparatus 100.

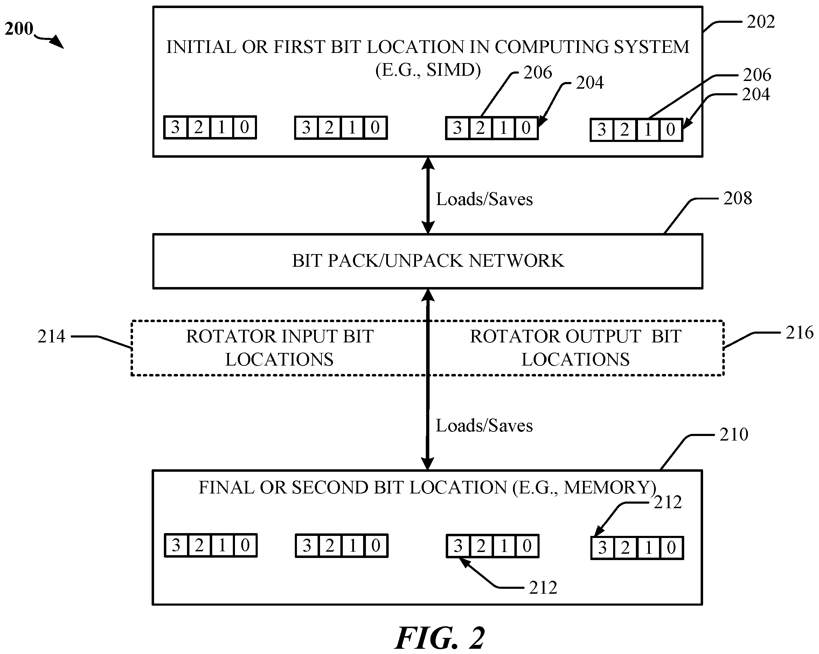

FIG. 2 illustrates an example of a processing system 200 that may be implemented within the various processing circuitry 104 in the example of FIG. 1, but not necessarily limited to such. In the example of system 200, a plurality of first bit locations 202 are shown. The bit locations may be implemented in any of a number of computational datapaths in a computer system. In one example, the plurality of bit locations 202 may be within a single-instruction, multiple data (SIMD) computational circuit. In other examples, the bit locations 202 may be implemented in any one of various computational circuitries, and may contain instructions or operations on data bits or bit words. The bit locations 202 may include a number of elements or registers 204 having a set number of bits, register partitions, or bit slots 206. While the elements 204 in FIG. 2 are illustrated with 4 bits or, alternatively, register partitions, for simplicity's sake, those skilled in the art will appreciate that the number of bits or register partitions may be more or less than as illustrated. Also, it is noted that each register 204 correspond to a particular SIMD or vector processing lane in some examples.

As discussed previously, processing may operate different data having varying data widths dependent on the application or software being executed at bit locations 202. In particular, the nature of processing is such that the bit width can typically vary from 1 up to 32 bits wide, for example, but is not necessarily limited to such range, at every step of processing in a computational system, such as system 200.

The system 200 further includes a bit packing/unpacking network 208 that is configured to either pack bits output from or being saved in the bit locations 202 or unpack bits read out of or being loaded from second bit locations 210 (e.g., a memory device such as a RAM memory) into the bit locations 202, for example. The network 208, as will be described in more detail herein, may be a physical network or pipestage that is configured to route bits from the SIMD unit 202 to achieve bit packing and bit unpacking. Bit packing networks, such as network 208, may employ various components such as logic gates and multiplexers (not shown) that achieve bit packing/unpacking by effectuating different network configurations for different data widths. Thus, some known bit packing networks may constitute multiple networks that are overlaid on a shared physical connections or pipestage to handle multiple varying data bit widths

According to one aspect, the bit locations 210 is configured to receive bit writes to memory locations, cells, or banks 212 therein and, in this case, receive the bits via the bit pack network 208. Additionally, the bit locations 210 may be configured for bit reads or loads of data bits read out to the bit locations 202 where the network 208 serves to unpack bits packed in the memory locations. It is noted that, in an aspect, when the bit locations 210 are implemented with a memory, such as memory 210, the locations 210 may be constructed according to typical memory constructions with 2^{N} word sizes where N may be equal to 3, 4, 5, or 6 resulting in corresponding 8, 16, 32, or 64 bit word sizes.

In other aspects, it is noted that the system 200 may include one or more SIMD or Vector processing lanes. Additionally, although the system 200 is illustrated with an example of bit locations 202 in a SIMD processing unit, as merely one example, it is noted that the presently disclosed methods and apparatus are not limited to use with such processing units, and those skilled in the art will appreciate application to other types of computational units and systems, such as CPUs, GPUs, other types of arrangements of arithmetic logic units (ALUs), etc. Furthermore, it is noted that system 200 may also be implemented as a processor to processor datapath configuration where bit locations unit 210 could be implemented as another processing datapath, such as another SIMD or processor circuitry, rather than as part of a memory datapath.

As will be discussed in more detail later, the system 200 may include a data bit rotator where the bit rotation is also used with pack networks (e.g., pack network 208) for subsequent accesses. This bit rotation is illustrated by block 214 showing rotator input bit locations where bits packed by pack network 208 are rotated prior to transmission to the second bit locations 210. Similarly, for unpacking, where network 208 is used to unpack bits for transmission of bits from second locations 210 to first locations 202, bit rotation is also utilized in reverse. This bit rotation is illustrated by block 216 showing rotator output bit locations.

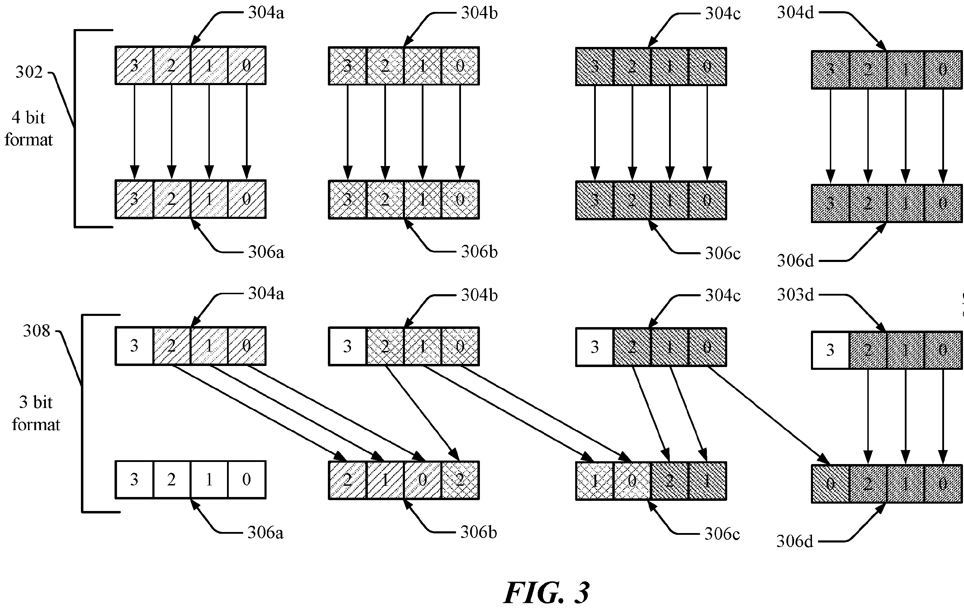

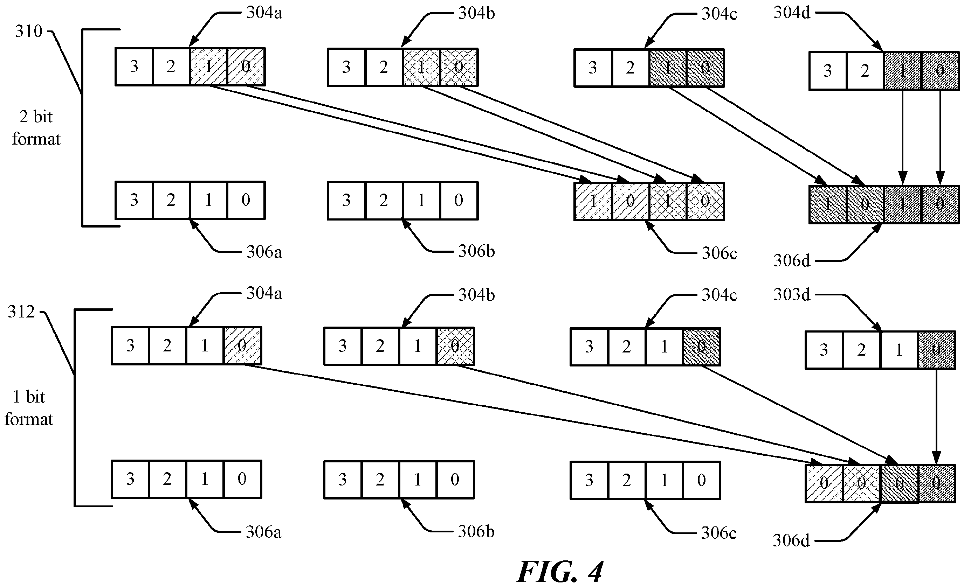

FIGs. 3 and 4 illustrate a conventional bit packing network scheme that implements the packing and unpacking of data bits for varying data bit widths. In particular, the bit packing network illustrated in FIGs. 3 and 4 shows a 4 pack network case for bit elements having widths of 1, 2, 3, or 4 bits elements. It is noted that this type of packing network constitutes 4 networks that overlaid in a same pipestage (e.g., 208 in FIG. 2), wherein the network thus utilizes configurable selectors, such a 4 bit wide multiplexers, for the smallest or least significant bits to effectuate the 4 different networks. These networks are configured for handling four different cases in the illustrated example, although this could be more or less according to other embodiments, which are not illustrated. The four illustrated cases are 4 bit, 3 bit, 2 bit, and 1 bit packing cases.

As may be seen in FIG. 3, a 4 bit format case is illustrated at 302 where 4 bits of data are contained in each element or register 302 of a plurality of elements or registers (i.e., 304a-304d). Each of the four different shadings for each of the respective registers denotes four different elements in a vector, which may be comprised of the four elements 304 or registers 304 in the illustrated example. The packing network, which may be correlated to network 208 in FIG. 2, is configured to pass each of bits 0 through 3 in the elements 304 to respective registers or memory banks 306a-306d. The elements 306 may be contained within a memory device, such as memory device 210 in FIG. 2 in one example of a memory datapath. In another example, the elements 306 constitute registers in a compute datapath, whether actual or virtual.

In another case 308 of a 3 bit format where each computation yields a bit width of 3 bits, bit packing may serve to pack the bits so that only 3 elements or registers are utilized for storing the bits in the memory or for use in a subsequent portion of a computer datapath. In this case, it may be seen that each of the elements 304 contain 3 bits 0 to 2, and the bit packing network in this case is a configuration where the 3 bits from first register 304d are routed by the packing network to the memory bank, register, or element 306d, the least significant or lowest bit (bit 0) is routed to the remaining slot in memory bank, register, or element 306d from the next register 304c. The remaining bits 1 and 2 are then routed to the memory bank, register, or element 304c, and so forth as illustrated in case 308. As may be seen, the final result of the bit packing is that the bits in the first registers 304 are packed into 3 of the 4 registers or memory banks 306 (e.g., 306b, 306c, and 306d) in the memory datapath or computation datapath.

Turning to FIG. 4, another case of a 2 bit format is shown at 310. In such case, each computation yields a bit width of 2 bits, and the bit packing network packs the bits so that only 2 elements or registers are utilized for storing the bits in the memory or for use in a subsequent portion of a computer datapath. In this case, it may be seen that each of the elements 304 contain 2 bits 0 and 1, and the bit packing network in this case is a configuration where the 2 bits from first register 304d are routed by the packing network to the memory bank, register, or element 306d, the two bits from the next register 304c are routed to the remaining two slots in memory bank, register, or element 306d. Bits 0 and 1 from the yet next register 304b are routed to the memory bank, register, or element 306b, and so forth as illustrated in case 310. As illustrated, the final result of the bit packing is that the bits in the first registers 304 are packed into 2 of the 4 registers or memory banks 306 (e.g., 306c, and 306d) in the memory datapath or computation datapath.

In still another case illustrated in FIG. 4, a 1 bit format is shown at 312. In this case, each computation would yield a bit width of 1 bits, and the bit packing network packs the bits so that only 1 element or register may be utilized for storing the bits in the memory or for use in a subsequent portion of a computer datapath. In this case, it may be seen that each of the elements 304 contain a single bit 0 and the bit packing network, in this case, is a configuration where the 1 bits from each of registers 304 are routed by the packing network to a single memory bank, register, or element 306d.

It is noted that for unpacking operations from a memory to a SIMD unit, for example, a mirror network may be effected by reversing the paths shown in the packing networks illustrated in FIGs. 3 and 4. It is further noted that for an unpacking network, those skilled in the art will appreciate that a separate word rotation network such as a crossbar, omega, or rotator network may be required for subsequent accesses. In connection therewith, is noted that a rotation function is utilized for both pack and unpack modes in order to align to a current address of memory, for example. In particular, it is noted that for a pack mode, a left rotation could be utilized after the pack network operation so that the packed elements are moved to a correct memory offset specified by the address of the least packed element, as an example. Accordingly, for the unpack mode given this example, a right rotation would be needed prior to the unpack network operation so that the elements read from the least element memory offset are then properly aligned to the unpack network. In a further aspect, it is noted that the mirror unpack network could be implemented as a separate network from the pack network or, alternatively, the pack and unpack networks could be implemented with a tri-stated, bi-directional network that is dynamically configurable to be operable in either an unpack or pack modes.

As mentioned before, the 4 pack networks illustrated in FIGs. 3 and 4 are typically overlaid in the same pipestage. This overlaying results in N bit wide multiplexers for position N-1, N-1 bit wide multiplexers for position N-2, and so forth until a single line or width for position 0 for the pack side, as well as similar loading on the mirrored unpack side, which results in higher cost, area, and power for the network, as well increased latency. In the examples of FIGs. 3 and 4, it is noted that the overlay would result in up to 4 bit wide multiplexers.

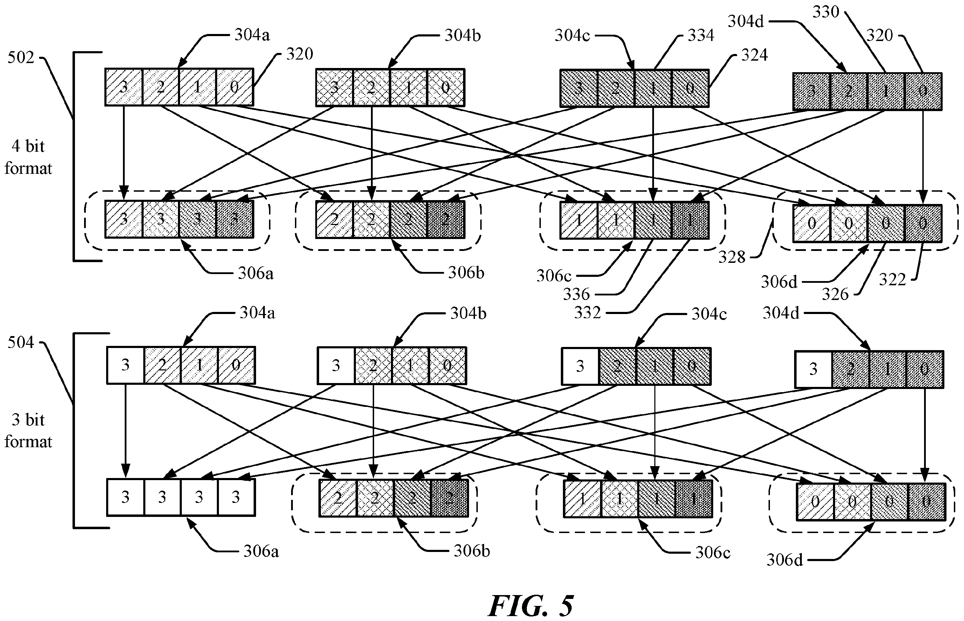

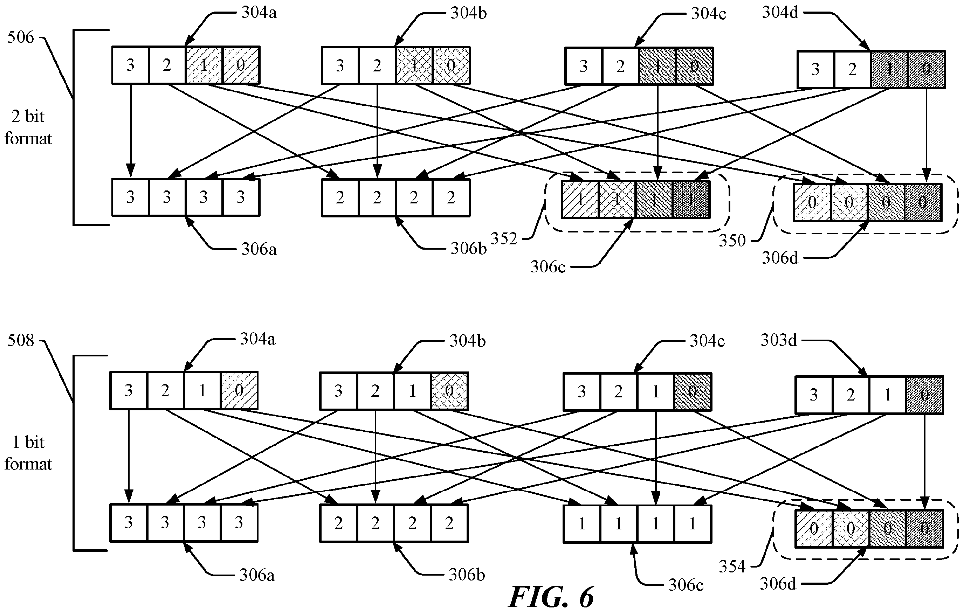

In order to be optimize bit packing and unpacking, FIGs. 5 and 6 illustrate an alternative bit packing/unpacking network having a single, fixed, or unitary network structure to accommodate variable data widths. This network structure may be utilized for 1, 2, 3, or 4 bit elements, as an example, and does not require separate networks overlaid on a pipeline thereby speeding access, reducing the cost and area, and optimizing power consumption. The network shown in FIGs. 5 and 6 effectively shuffles and deals bits of multiple elements together to form bit bundles of same bit locations of the elements and stores the bit bundles in memory at the memory word size or integer multiples of the memory word size. In an aspect, the bundle size is a multiple of the number of SIMD elements or SIMD lanes. Furthermore, the signal pack/unpack network disclosed herein may be implemented in a memory datapath, as well as a compute datapath. In an aspect the networks of FIGs. 5 and 6 are examples of implementations of network 208 illustrated in FIG. 2.

Turning to FIG. 5, a first example of the bit pack network and its operation for 4 bit width data is shown at 502. As illustrated, the same bit location from each of registers or elements 304 are routed to a register or memory bank 306. For example, bit 0 at location or slot 320 in register 304d is routed to slot 322 in register or memory bank 306d, bit 0 at location or slot 324 in register 304c is routed to slot 326 in register or memory bank 306d, and so on for the bit 0 data in registers or elements 304a and 304b. The grouping or bundling of same bit locations yields a bit bundle 328 that is stored in memory for a memory datapath, or temporarily stored in the case of a computer datapath. As mentioned above, for packing network, before storing the data in memory a rotation will be performed as specified by the low bits of the address of the least number element being packed and the reverse rotation for the unpack network. In an aspect, the use of a rotator input bit locations 214 or rotator output bit locations 216 illustrated in FIG. 2 are used to implement rotation for pack and unpack modes.

The routing into bit bundles is effectuated for all positions as may be seen in example 502. For example, bit 1 data in register or element 304d at slot or location 330 is routed to register or memory bank 306c at a first location 332. The bit 1 location in location or slot 334 in register 304c is routed to slot or location 336 in register 306c, and so forth. The routing of the present pack/unpack network may also be readily seen from the respective shading for locations in the registers 304 and their new locations for this bit data in registers 306 after the bit packing operation. Thus, in this example, 4 bit bundles are generated corresponding to the registers 306a-306d.

FIG. 5 further shows an example of a 3 bit format at 504. In this example, the resultant bit packing generates 3 bit bundles corresponding to registers or memory banks 306b-306d. Similarly, FIG. 6 illustrates two more examples 506 and 508 illustrating the operation of the bit pack/unpack network for 2 and 1 bit formats, respectively, which result in 2 bit bundles 350, 352 in the case of the 2 bit format and 1 bit bundle 354 in the case of the 1 bit format.

In general terms, the bit packing and unpacking network illustrated in FIGs. 5 and 6 provides for bit packing or unpacking of various bit widths in a computer system without the need to overlay different network configurations on a pipestage, and may be applied to bit words or memory words of various numbers of bits, not just 4 or 16 bits as illustrated. Also, each bit location in the illustrated elements or registers may be bit words of more than one bit. In particular, it is noted in one aspect that the granularity of each location can be a bit or any number of bits as long as the following relationship is maintained: the element width = Number of Location Slots x Bits per Slot in order to achieve maximum storage efficiency. Accordingly, the network system may be configurable as a first plurality of registers (e.g., 304) each having a predetermined number of bit slots in the register that temporarily store or hold one or more bits in respective slots of the predetermined number of bit slots, where the predetermined number of bits correspond to one of a number of different data bit widths (e.g., 1, 2, 3 bit formats and so forth). The network itself may then be configured a single, unitary, or fixed bit packing network that is configured to pack data bits of a number of different bit widths from the first plurality of registers to a second plurality of registers or memory banks (e.g., 306) wherein the network is configured to pack bits stored in a same bit slot position in respective registers of the first plurality of registers by routing the bits into bit slots of a same register in the second plurality of registers to form bit bundles in respective ones of the second plurality of registers or memory banks.

It is noted that pack/unpack network illustrated in FIGs. 5 and 6 may be implemented as a physical network in a chip or integrated circuit that effects computational circuitry, such as an SIMD Unit and memory device, but the structure is not necessarily limited to only such applications and may be applied to various computational circuitry that has need to accommodate variable data bit widths. In an embodiment in accordance with the claims, the single, unitary, or fixed bit packing network includes fixed point-to-point connections between bit slots in the first plurality of registers and a bit slots in the second plurality of registers. In other aspects, however, it may be envisioned that the network, while single or unitary in nature, may be implemented through logic devices or programmable gate arrays as well.

According to further aspects, the pack/unpack network is configured such that the number of bits in a bit bundle corresponds to a memory data word size of the memory device, or a multiple thereof. In another aspect, wherein the bits in the first plurality of registers are received from a SIMD unit having a number of lanes and the size of each bit bundle is a multiple of the number of lanes of the SIMD unit.

In a further aspect, the network illustrated in FIGs. 5 and 6 is operable for an unpacking operation wherein bit bundles in the plurality of second registers are unpacked to the plurality of first registers by reverse operation of the fixed bit packing network. It is noted that for unpacking operations from a memory to a SIMD unit, for example, a mirror network may be effected by reversing the network paths shown in the packing networks illustrated in FIGs. 5 and 6. It is further noted that for an unpacking network, those skilled in the art will appreciate that a separate word rotation network such as a crossbar, omega, or rotator network would be required for subsequent accesses.

It is further noted here, that the networks of FIGs. 5 and 6 are implementations of network 208 in FIG, 2, as mentioned before. In aspects, the bit locations 202 and 210 could also be implemented by a plurality of registers, where a register could be implemented as one register containing all of the SIMD lanes or each lane could be a register. Also the source and sink types could be a register or memory or pipeline stage within the datapath. Furthermore, the structure of FIGs. 5 and 6 may be configured such that the maximum element size equals the maximum element number.

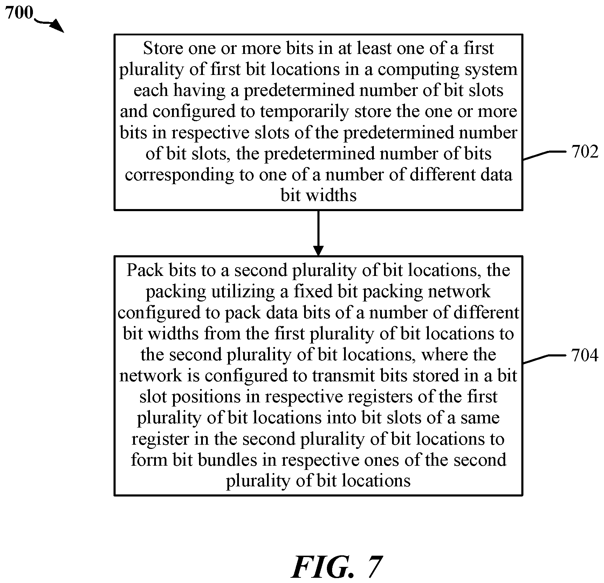

FIG. 7 illustrates a flow diagram of a method 700 for providing and operating a computational circuitry including a single bit pack network in accordance with aspects of the present disclosure. The method 700 includes storing one or more bits in at least one of a first plurality of bit locations (e.g., 204 in 202) or a means for storing in a plurality of bit locations each having a predetermined number of bit slots (e.g., 206) in configured to temporarily store the one or more bits in respective slots of the predetermined number of bit slots as shown in block 702. The predetermined number of bits may correspond to one of a number of different data bit widths.

Method 700 further includes packing bits and storing or transmitting the packed bits to a second plurality of bit locations (e.g., 212 in 210), where the packing utilizes a fixed bit packing network configured to pack data bits of a number of different bit widths from the first plurality of bit locations to the second plurality of bit locations, wherein the network is configured to pack or transmit bits stored in a bit slot positions in respective registers of the first plurality of bit locations into bit slots of a same bit location in the second plurality of bit locations to form bit bundles (e.g., 328) in respective ones of the second plurality of bit locations as shown in block 704. It is noted that method 700 may be implemented with the bit pack/unpack networks or systems illustrated in FIGs. 5 and 6 and described earlier.

In other aspects, method 700 may include storing the bit bundles in a memory device where the number of bits in a bit bundle corresponds to a memory data word size of the memory device. In other aspect, the fixed bit packing network includes fixed point-to-point connections between bit slots in the first plurality of bit locations and a bit slots in the second plurality of bit locations. Additionally, the fixed bit packing network may be implemented as a portion of a computation datapath network or a memory datapath.

According to further aspects of method 700, the bits in the first plurality of bit locations may be received from or generated in a SIMD unit having a number of lanes. The size of each bit bundle may be a multiple of the number of lanes of the SIMD unit. In still another aspect, method 700 is further operable to perform an unpacking operation wherein bit bundles in the plurality of second bit locations are unpacked to the plurality of first bit locations by reverse operation of the fixed bit packing network.

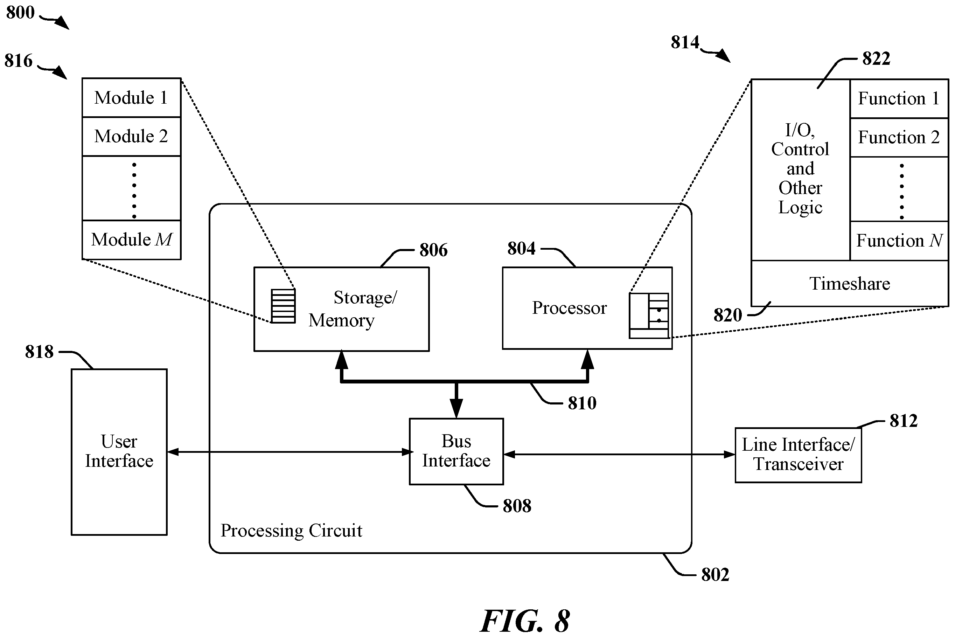

FIG. 8 illustrates an example of an apparatus employing a processing circuit that may be adapted according to certain aspects disclosed herein. In some examples, the apparatus 800 may perform one or more functions disclosed herein. In accordance with various aspects of the disclosure, an element, or any portion of an element, or any combination of elements as disclosed herein may be implemented using a processing circuit 802. The processing circuit 802 may include one or more processors 804 that are controlled by some combination of hardware and software modules. Examples of processors 804 include microprocessors, microcontrollers, digital signal processors (DSPs), SoCs, ASICs, field programmable gate arrays (FPGAs), programmable logic devices (PLDs), state machines, sequencers, gated logic, discrete hardware circuits, SIMDs, ALUs, and other suitable hardware configured to perform or coordinate the various functionalities described throughout this disclosure. The one or more processors 804 may include specialized processors that perform specific functions, and that may be configured, augmented or controlled by one of the software modules 816. The one or more processors 804 may be configured through a combination of software modules 816 loaded during initialization, and further configured by loading or unloading one or more software modules 816 during operation.

In the illustrated example, the processing circuit 802 may be implemented with a bus architecture, represented generally by the bus 810. The bus 810 may include any number of interconnecting buses and bridges depending on the specific application of the processing circuit 802 and the overall design constraints. In particular, the bus 810 may be configured to include the packing networks of FIGs. 4 and 5, in one example. The bus 810 links together various circuits including the one or more processors 804 and storage 806, such as implementing a processing datapath to another processing datapath with an intervening pack/unpack network or a processing datapath to a memory device with an intervening pack/unpack network.

Storage 806 may include memory devices and mass storage devices, and may be referred to herein as computer-readable media and/or processor-readable media. The bus 810 may also link various other circuits such as timing sources, timers, peripherals, voltage regulators, and power management circuits. A bus interface 808 may provide an interface between the bus 810 and one or more line interfaces/transceivers 812. A transceiver 812 may be provided for each networking technology supported by the processing circuit. In some instances, multiple networking technologies may share some or all of the circuitry or processing modules found in a transceiver 812. Each transceiver 812 provides a means for communicating with various other apparatus over a transmission medium. In one example, a transceiver 812 may be used to couple the apparatus 800 to a multi-wire bus. In another example, a transceiver 812 may be used to connect the apparatus 800 to a wireless network. Depending upon the nature of the apparatus 800, a user interface 818 (e.g., keypad, display, speaker, microphone, joystick) may also be provided, and may be communicatively coupled to the bus 810 directly or through the bus interface 808.

A processor 804 may be responsible for managing the bus 810 and for general processing that may include the execution of software stored in a computer-readable medium that may include the storage 806. In this respect, the processing circuit 802, including the processor 804, may be used to implement any of the methods, functions and techniques disclosed herein. The storage 806 may be used for storing data that is manipulated by the processor 804 when executing software, and the software may be configured to implement any one of the methods disclosed herein.

One or more processors 804 in the processing circuit 802 may execute software. Software shall be construed broadly to mean instructions, instruction sets, code, code segments, program code, programs, subprograms, software modules, applications, software applications, software packages, routines, subroutines, objects, executables, threads of execution, procedures, functions, algorithms, etc., whether referred to as software, firmware, middleware, microcode, hardware description language, or otherwise. The software may reside in computer-readable form in the storage 806 or in an external computer-readable medium. The external computer-readable medium and/or storage 806 may include a non-transitory computer-readable medium. A non-transitory computer-readable medium includes, by way of example, a magnetic storage device (e.g., hard disk, floppy disk, magnetic strip), an optical disk (e.g., a compact disc (CD) or a digital versatile disc (DVD)), a smart card, a flash memory device (e.g., a "flash drive," a card, a stick, or a key drive), RAM, ROM, a programmable read-only memory (PROM), an erasable PROM (EPROM) including EEPROM, a register, a removable disk, and any other suitable medium for storing software and/or instructions that may be accessed and read by a computer. The computer-readable medium and/or storage 806 may also include, by way of example, a carrier wave, a transmission line, and any other suitable medium for transmitting software and/or instructions that may be accessed and read by a computer. Computer-readable medium and/or the storage 806 may reside in the processing circuit 802, in the processor 804, external to the processing circuit 802, or be distributed across multiple entities including the processing circuit 802. The computer-readable medium, memory, and/or storage 806 may be embodied in a computer program product. By way of example, a computer program product may include a computer-readable medium in packaging materials. Those skilled in the art will recognize how best to implement the described functionality presented throughout this disclosure depending on the particular application and the overall design constraints imposed on the overall system.

The storage 806 may maintain software maintained and/or organized in loadable code segments, modules, applications, programs, etc., which may be referred to herein as software modules 816. Each of the software modules 816 may include instructions and data that, when installed or loaded on the processing circuit 802 and executed by the one or more processors 804, contribute to a run-time image 814 that controls the operation of the one or more processors 804. When executed, certain instructions may cause the processing circuit 802 to perform functions in accordance with certain methods, algorithms and processes described herein.

Some of the software modules 816 may be loaded during initialization of the processing circuit 802, and these software modules 816 may configure the processing circuit 802 to enable performance of the various functions disclosed herein. For example, some software modules 816 may configure internal devices and/or logic circuits 822 of the processor 804, and may manage access to external devices such as the transceiver 812, the bus interface 808, the user interface 818, timers, mathematical coprocessors, and so on. The software modules 816 may include a control program and/or an operating system that interacts with interrupt handlers and device drivers, and that controls access to various resources provided by the processing circuit 802. The resources may include memory, processing time, access to the transceiver 812, the user interface 818, and so on.

One or more processors 804 of the processing circuit 802 may be multifunctional, whereby some of the software modules 816 are loaded and configured to perform different functions or different instances of the same function. The one or more processors 804 may additionally be adapted to manage background tasks initiated in response to inputs from the user interface 818, the transceiver 812, and device drivers, for example. To support the performance of multiple functions, the one or more processors 804 may be configured to provide a multitasking environment, whereby each of a plurality of functions is implemented as a set of tasks serviced by the one or more processors 804 as needed or desired. In one example, the multitasking environment may be implemented using a timesharing program 820 that passes control of a processor 804 between different tasks, whereby each task returns control of the one or more processors 804 to the timesharing program 820 upon completion of any outstanding operations and/or in response to an input such as an interrupt. When a task has control of the one or more processors 804, the processing circuit is effectively specialized for the purposes addressed by the function associated with the controlling task. The timesharing program 820 may include an operating system, a main loop that transfers control on a round-robin basis, a function that allocates control of the one or more processors 804 in accordance with a prioritization of the functions, and/or an interrupt driven main loop that responds to external events by providing control of the one or more processors 804 to a handling function.

In further aspects, the processor 804 may employ SIMD units or equivalents thereof. The processor 804 may be configured to implement bit packing and unpacking in accordance with the networks disclosed in FIGs. 5 and 6 or the methodology of FIG. 7. Additionally, the processor 804 may be configured to include a physical point-to-point network or connections between the processing or computational circuitry therein and memory devices such as RAM memory (not shown) in one example that is contained within the processor 804. Still further in an implementation, memory 806 may comprise a computer-readable medium contain code, modules (e.g., 816), or instructions for configuring the packing/unpacking networks in the processor 804, such as in the case where the pack/unpack network is configurable with logic circuitry or FPGAs, as examples.

It is understood that the specific order or hierarchy of steps in the processes disclosed is merely an example of exemplary approaches. Based upon design preferences, it is understood that the specific order or hierarchy of steps in the processes may be rearranged while remaining within the scope of the present disclosure. The accompanying method claims present elements of the various steps in a sample order, and are not necessarily meant to be limited to the specific order or hierarchy presented if it is possible to change the order or hierarchy.

Those of skill in the art will understand that information and signals may be represented using any of a variety of different technologies and techniques. For example, data, instructions, commands, information, signals, bits, symbols, and chips that may be referenced throughout the above description may be represented by voltages, currents, electromagnetic waves, magnetic fields or particles, optical fields or particles, or any combination thereof.

Those of skill in the art will further appreciate that the various illustrative logical blocks, modules, circuits, and algorithm steps described in connection with the embodiments disclosed herein may be implemented as electronic hardware, computer software, or combinations of both. To clearly illustrate this interchangeability of hardware and software, various illustrative components, blocks, modules, circuits, and steps have been described above generally in terms of their functionality. Whether such functionality is implemented as hardware or software depends upon the particular application and design constraints imposed on the overall system. Those skilled in the art may implement the described functionality in varying ways for each particular application, but such implementation decisions should not be interpreted as causing a departure from the scope of the present invention.

The various illustrative logical blocks, modules, and circuits described in connection with the embodiments disclosed herein may be implemented or performed with a general purpose processor, a digital signal processor (DSP), an application specific integrated circuit (ASIC), a field programmable gate array (FPGA) or other programmable logic device, discrete gate or transistor logic, discrete hardware components, or any combination thereof designed to perform the functions described herein. A general purpose processor may be a microprocessor, but in the alternative, the processor may be any conventional processor, controller, microcontroller, or state machine. A processor may also be implemented as a combination of computing devices, e.g., a combination of a DSP and a microprocessor, a plurality of microprocessors, one or more microprocessors in conjunction with a DSP core, or any other such configuration.

The steps of a method or algorithm described in connection with the embodiments disclosed herein may be embodied directly in hardware, in a software module executed by a processor, or in a combination of the two. A software module may reside in RAM memory, flash memory, ROM memory, EPROM memory, EEPROM memory, registers, hard disk, a removable disk, a CD-ROM, or any other form of storage medium known in the art. An exemplary storage medium is coupled to the processor such the processor can read information from, and write information to, the storage medium. In the alternative, the storage medium may be integral to the processor. The processor and the storage medium may reside in an ASIC. The ASIC may reside in a user terminal. In the alternative, the processor and the storage medium may reside as discrete components in a user terminal.

The above description is provided to enable any person skilled in the art to practice the various aspects described herein. Various modifications to these aspects will be readily apparent to those skilled in the art, and the generic principles defined herein may be applied to other aspects. Thus, the claims are not intended to be limited to the aspects shown herein, but are to be accorded the full scope consistent with the language of the claims.

## Claims

1. An apparatus (200) configured for bit packing data having various bit widths in a computer system, the apparatus comprising:
a first plurality of bit locations (202) in the computer system, each bit location of the first plurality of bit locations comprising a register (304) with a predetermined number of bit slots (206) and each bit slot of the predetermined number of bit slots configured to temporarily store a respective bit of a predetermined number of bits of data, the predetermined number of bits corresponding to one of a number of different data bit widths; and
a fixed bit packing network (208) configured to pack the predetermined number of bits from the first plurality of bit locations (202) to a second plurality of bit locations (210) in the computer system, wherein the fixed bit packing network is configured to pack the predetermined number of bits by routing all bits of the predetermined number of bits stored in a same particular bit slot position (320) in the predetermined number of bit slots within each respective bit location of the first plurality of bit locations (202) to bit slots (322) of a register (306) of a particular bit location of the second plurality of bit locations (210) to form bit bundles (328) in respective ones of the second plurality of bit locations (210),
wherein the fixed bit packing network (208) includes fixed point-to-point connections between the bit slots in the first plurality of bit locations (202) and the bit slots in the second plurality of bit locations (210), and is configured to
accommodate each of the number of different data bit widths input to the first plurality of bit locations, and
pack data from the first plurality of bit locations into the second plurality of bit locations.

2. The apparatus (200) of claim 1, further comprising:
the second plurality of bit locations (202) contained within a memory device, wherein the memory device is further configured to store the bit bundles (328).

3. The apparatus (200) of claim 2, wherein the second plurality of bit locations (210) comprises a plurality of memory cells in the memory device.

4. The apparatus (200) of claim 3, wherein the number of bits in a bit bundle (328) corresponds to a memory data word size of the memory device.

5. The apparatus (200) of claim 1, wherein the fixed bit packing network (208) comprises a portion of one of a computation datapath network or a memory datapath.

6. The apparatus (200) of claim 1, wherein the bits in the first plurality of bit locations (202) are generated by a single-instruction, multiple data, SIMD, unit having a number of lanes.

7. The apparatus (200) of claim 6, wherein each bit bundle (328) has a size that is a multiple of the number of lanes of the SIMD unit.

8. The apparatus (200) of claim 1, wherein the apparatus is further operable for an unpacking operation wherein bit bundles (328) in the plurality of second bit locations (210) are unpacked to the plurality of first bit locations by reverse operation of the fixed bit packing network (208).

9. A method (700) of operating a computational circuitry, comprising:
storing (702) one or more bits in at least one of a first plurality of bit locations (202), each bit location of the first plurality of bit locations comprising a register (304) with a predetermined number of bit slots (206) and each bit slot of the predetermined number of bit slots configured to temporarily store a respective bit of a predetermined number of bits of data, the predetermined number of bits corresponding to one of a number of different data bit widths; and
packing (704) bits to a second plurality of bit locations (210), the packing utilizing a fixed bit packing network (208) configured to pack the predetermined number of bits from the first plurality of bit locations (202) to the second plurality of bit locations (210), wherein the fixed bit packing network (208) is configured to pack the predetermined number of bits by routing all bits of the predetermined number of bits stored in a same particular bit slot position (320) in the predetermined number of bit slots within each respective bit location of the first plurality of bit locations (202) to bit slots of a particular register (306) of a bit location of the second plurality of bit locations (210) to form bit bundles (328) in respective ones of the second plurality of bit locations (210),
wherein the fixed bit packing network (208) includes fixed point-to-point connections between the bit slots in the first plurality of bit locations (202) and the bit slots in the second plurality of bit locations (210), and is configured to
accommodate each of the number of different data bit widths input to the first plurality of bit locations, and
pack data from the first plurality of bit locations into the second plurality of bit locations.

10. The method (700) of claim 9, further comprising:
storing the bit bundles (328) in a memory device, wherein the second plurality of bit locations are contained within the memory device.

11. The method (700) of claim 10, wherein the number of bits in a bit bundle corresponds to a memory data word size of the memory device.

12. The method (700) of claim 9, wherein the fixed bit packing network (208) comprises a portion of one of a computation datapath network or a memory datapath.

13. The method (700) of claim 9, wherein the predetermined number of bits of the data in the first plurality of bit locations are received from a SIMD unit having a number of lanes.

14. The method (700) of claim 13, wherein each bit bundle has a size that is a multiple of the number of lanes of the SIMD unit.

15. The method (700) of claim 9, further comprising executing an unpacking operation wherein bit bundles in the plurality of second bit locations are unpacked to the plurality of first bit locations by reverse operation of the fixed bit packing network.

## Patentansprüche

1. Eine Vorrichtung (200), die konfiguriert ist zum Bit-Packing bzw. bitweisen Packen von Daten mit unterschiedlichen Bitbreiten in einem Computersystem, wobei die Vorrichtung Folgendes aufweist:
eine erste Vielzahl von Bitpositionen (202) in dem Computersystem, wobei jede Bitposition der ersten Vielzahl von Bitpositionen ein Register (304) mit einer vorbestimmten Anzahl von Bitschlitzen (206) aufweist und wobei jeder Bitschlitz der vorbestimmten Anzahl von Bitschlitzen konfiguriert ist zum temporären Speichern eines jeweiligen Bits einer vorbestimmten Anzahl von Bits von Daten, wobei die vorbestimmte Anzahl von Bits einer Anzahl von unterschiedlichen Datenbitbreiten entspricht; und
ein fixes Bit-Packing-Netzwerk (208), das konfiguriert ist zum Packen der vorbestimmten Anzahl von Bits von der ersten Vielzahl von Bitpositionen (202) an eine zweite Vielzahl von Bitpositionen (210) in dem Computersystem, wobei das fixe Bit-Packing-Netzwerk konfiguriert ist zum Packen der vorbestimmten Anzahl von Bits durch Routen bzw. Lenken aller Bits der vorbestimmten Anzahl von Bits, die in einer gleichen bestimmten Bitschlitzposition (320) in der vorbestimmten Anzahl von Bitschlitzen innerhalb jeder jeweiligen Bitposition der ersten Vielzahl von Bitpositionen (202) gespeichert sind an Bitschlitze (322) eines Registers (306) einer bestimmten Bitposition der zweiten Vielzahl von Bitpositionen (210), um Bitbündel (328) in jeweiligen Bitpositionen der zweiten Vielzahl von Bitpositionen (210) zu bilden,
wobei das fixe Bit-Packing-Netzwerk (208) fixe Punkt-zu-Punkt-Verbindungen zwischen den Bitschlitzen in der ersten Vielzahl von Bitpositionen (202) und den Bitschlitzen in der zweiten Vielzahl von Bitpositionen (210) aufweist, und konfiguriert ist zum
Unterbringen jeder der Anzahl von unterschiedlichen Datenbitbreiten, die in die erste Vielzahl von Bitpositionen eingegeben sind, und
Packen von Daten von der ersten Vielzahl von Bitpositionen in die zweite Vielzahl von Bitpositionen.

2. Vorrichtung (200) nach Anspruch 1, die weiter Folgendes aufweist:
dass die zweite Vielzahl von Bitpositionen (202) innerhalb einer Speichereinrichtung enthalten ist, wobei die Speichereinrichtung weiter zum Speichern der Bitbündel (328) konfiguriert ist.

3. Vorrichtung (200) nach Anspruch 2, wobei die zweite Vielzahl von Bitpositionen (210) eine Vielzahl von Speicherzellen in der Speichereinrichtung aufweist.

4. Vorrichtung (200) nach Anspruch 3, wobei die Anzahl von Bits in einem Bitbündel (328) einer Speicherdatenwortgröße der Speichereinrichtung entspricht.

5. Vorrichtung (200) nach Anspruch 1, wobei das fixe Bit-Packing-Netzwerk (208) einen Teil von einem von einem Berechnungsdatenpfadnetzwerk oder einem Speicherdatenpfad aufweist.

6. Vorrichtung (200) nach Anspruch 1, wobei die Bits in der ersten Vielzahl von Bitpositionen (202) durch eine Einzelbefehl-Vielfach-Daten- bzw. SIMD-Einheit (SIMD = single-instruction multiple data) mit einer Anzahl von Bahnen generiert werden.

7. Vorrichtung (200) nach Anspruch 6, wobei jedes Bitbündel (328) eine Größe hat, die ein Vielfaches der Anzahl von Bahnen der SIMD-Einheit ist.

8. Vorrichtung (200) nach Anspruch 1, wobei die Vorrichtung weiter für eine Entpackungsoperation betreibbar ist, wobei Bitbündel (328) in der Vielzahl von zweiten Bitpositionen (210) in die Vielzahl von ersten Bitpositionen entpackt werden durch ein rückwärtsgerichtetes Betreiben des fixen Bit-Packing-Netzwerks (208).

9. Ein Verfahren (700) zum Betreiben von Berechnungsschaltkreisen, das Folgendes aufweist:
Speichern (702) von einem oder mehreren Bits in wenigstens einer ersten Vielzahl von Bitpositionen (202), wobei jede Bitposition der ersten Vielzahl von Bitpositionen ein Register (304) mit einer vorbestimmten Anzahl von Bitschlitzen (206) aufweist und jeder Bitschlitz der vorbestimmten Anzahl von Bitschlitzen konfiguriert ist zum temporären Speichern eines jeweiligen Bits einer vorbestimmten Anzahl von Bits von Daten, wobei die vorbestimmte Anzahl von Bits einer Anzahl von unterschiedlichen Datenbitbreiten entspricht; und
Packen (704) von Bits in eine zweite Vielzahl von Bitpositionen (210), wobei das Packen ein fixes Bit-Packing-Netzwerk (208) nutzt, das konfiguriert ist zum Packen der vorbestimmten Anzahl von Bits von der ersten Vielzahl von Bitpositionen (202) in die zweite Vielzahl von Bitpositionen (210), wobei das fixe Bit-Packing-Netzwerk (208) konfiguriert ist zum Packen der vorbestimmten Anzahl von Bits durch Weiterleiten aller Bits der vorbestimmten Anzahl von Bits, die in einer gleichen bestimmten Bitschlitzposition (320) in der vorbestimmte Anzahl von Bitschlitzen innerhalb jeder jeweiligen Bitposition der ersten Vielzahl von Bitpositionen (202) gespeichert sind in Bitschlitze eines bestimmten Registers (306) einer Bitposition der zweiten Vielzahl von Bitpositionen (210), um Bitbündel (328) in jeweiligen Bitpositionen der zweiten Vielzahl von Bitpositionen (210) zu bilden,
wobei das fixe Bit-Packing-Netzwerk (208) fixe Punkt-zu-Punkt-Verbindungen zwischen den Bitschlitzen in der ersten Vielzahl von Bitpositionen (202) und den Bitschlitzen in der zweiten Vielzahl von Bitpositionen (210) aufweist, und konfiguriert ist zum
Unterbringen jeder der Anzahl von unterschiedlichen Datenbitbreiten, die in die erste Vielzahl von Bitpositionen eingegeben sind, und
Packen von Daten von der ersten Vielzahl von Bitpositionen in die zweite Vielzahl von Bitpositionen.

10. Verfahren (700) nach Anspruch 9, das weiter Folgendes aufweist:
Speichern der Bitbündel (328) in einer Speichereinrichtung, wobei die zweite Vielzahl von Bitpositionen innerhalb der Speichereinrichtung enthalten ist.

11. Verfahren (700) nach Anspruch 10, wobei die Anzahl von Bits in einem Bitbündel einer Speicherdatenwortgröße der Speichereinrichtung entspricht.

12. Verfahren (700) nach Anspruch 9, wobei das fixe Bit-Packing-Netzwerk (208) einen Teil von einem von einem Berechnungsdatenpfadnetzwerk oder einem Speicherdatenpfad aufweist.

13. Verfahren (700) nach Anspruch 9, wobei die vorbestimmte Anzahl von Bits der Daten in der ersten Vielzahl von Bitpositionen von einer SIMD-Einheit empfangen wird, die eine Anzahl von Bahnen hat.

14. Verfahren (700) nach Anspruch 13, wobei jedes Bitbündel eine Größe hat, die ein Vielfaches der Anzahl von Bahnen der SIMD-Einheit ist.

15. Verfahren (700) nach Anspruch 9, das weiter Ausführen einer Entpackungsoperation aufweist, wobei Bitbündel in der Vielzahl von zweiten Bitpositionen in die Vielzahl von ersten Bitpositionen durch ein rückwärtsgerichtetes Betreiben des fixen Bit-Packing-Netzwerks entpackt werden.

## Revendications

1. Appareil (200) configuré pour regrouper de bits de données ayant diverses largeurs de bits dans un système informatique, l'appareil comprenant :
une première pluralité d'emplacements de bits (202) dans le système informatique, chaque emplacement de bit de la première pluralité d'emplacements de bits comprenant un registre (304) avec un nombre prédéterminé de slots de bits (206) et chaque slot de bits du nombre prédéterminé de slots de bits étant configuré pour stocker temporairement un bit respectif d'un nombre prédéterminé de bits de données, le nombre prédéterminé de bits correspondant à un parmi un certain nombre de largeurs de bits de données différentes ; et
un réseau de regroupement de bits fixe (208) configuré pour regrouper le nombre prédéterminé de bits provenant de la première pluralité d'emplacements de bits (202) dans une deuxième pluralité d'emplacements de bits (210) dans le système informatique, dans lequel le réseau de regroupement de bits fixe est configuré pour regrouper le nombre prédéterminé de bits en acheminant tous les bits du nombre prédéterminé de bits stockés dans un même emplacement de slot de bits particulier (320) dans le nombre prédéterminé de slots de bits dans chaque emplacement de bits respectif de la première pluralité d'emplacements de bits (202) dans des slots de bits (322) d'un registre (306) d'un emplacement particulier de bits de la deuxième pluralité d'emplacements de bits (210) pour former des groupes de bits (328) dans des emplacements respectifs de la deuxième pluralité d'emplacements de bits (210),
dans lequel le réseau de regroupement de bits fixe (208) comporte des connexions fixes point à point entre les slots de bits dans la première pluralité d'emplacements de bits (202) et les slots de bits dans la deuxième pluralité d'emplacements de bits (210), et est configuré pour
accommoder chaque largeur du certain nombre de largeurs de bits de données différentes entrée dans la première pluralité d'emplacements de bits, et
regrouper des données provenant de la première pluralité d'emplacements de bits dans la deuxième pluralité d'emplacements de bits.

2. Appareil (200) selon la revendication 1, comprenant en outre :
la deuxième pluralité d'emplacements de bits (202) contenus dans un dispositif mémoire, dans lequel le dispositif mémoire est en outre configuré pour stocker les groupes de bits (328) .

3. Appareil (200) selon la revendication 2, dans lequel la deuxième pluralité d'emplacements de bits (210) comprend une pluralité de cellules de mémoire dans le dispositif mémoire.

4. Appareil (200) selon la revendication 3, dans lequel le nombre de bits dans un groupe de bits (328) correspond à une taille de mot de données de mémoire du dispositif mémoire.

5. Appareil (200) selon la revendication 1, dans lequel le réseau de regroupement de bits fixe (208) comprend une partie d'un parmi un réseau de chemin de données de calcul ou un chemin de données de mémoire.

6. Appareil (200) selon la revendication 1, dans lequel les bits dans la première pluralité d'emplacements de bits (202) sont générés par une unité à instruction unique, données multiples, SIMD, ayant un certain nombre de canaux.

7. Appareil (200) selon la revendication 6, dans lequel chaque groupe de bits (328) a une taille qui est un multiple du nombre de canaux de l'unité SMID.

8. Appareil (200) selon la revendication 1, dans lequel l'appareil peut être actionné pour une opération de dégroupage dans laquelle des groupes de bits (328) dans la pluralité de deuxièmes emplacements de bits (210) sont dégroupés en la pluralité de premiers emplacements de bits par une opération inverse du réseau de regroupement de bits fixe (208).

9. Procédé (700) de fonctionnement d'un circuit de calcul, comprenant :
le stockage (702) d'un ou de plusieurs bits dans au moins un parmi une première pluralité d'emplacements de bits (202), chaque emplacement de bit de la première pluralité d'emplacements de bits comprenant un registre (304) avec un nombre prédéterminé de slots de bits (206) et chaque slot de bits du nombre prédéterminé de slots de bits étant configuré pour stocker temporairement un bit respectif d'un nombre prédéterminé de bits de données, le nombre prédéterminé de bits correspondant à une parmi un certain nombre de largeurs de bits de données différentes ; et
le regroupement (704) de bits dans une deuxième pluralité d'emplacements de bits (210), le regroupement utilisant un réseau de regroupement de bits fixe (208) configuré pour regrouper le nombre prédéterminé de bits à partir de la première pluralité d'emplacements de bits (202) dans une deuxième pluralité d'emplacements de bits (210), dans lequel le réseau de regroupement de bits fixe (208) est configuré pour regrouper le nombre prédéterminé de bits en acheminant tous les bits du nombre prédéterminé de bits stockés dans un même emplacement de slot de bits particulier (320) dans le nombre prédéterminé de slots de bits dans chaque emplacement de bits respectif de la première pluralité d'emplacements de bits (202) dans des slots de bits d'un registre particulier (306) d'un emplacement de bits de la deuxième pluralité d'emplacements de bits (210) pour former des groupes de bits (328) dans des emplacements respectifs de la deuxième pluralité d'emplacements de bits (210),
dans lequel le réseau de regroupement de bits fixe (208) comporte des connexions fixes point à point entre les slots de bits dans la première pluralité d'emplacements de bits (202), et les slots de bits dans la deuxième pluralité d'emplacements de bits (210), et est configuré pour
accommoder chaque largeur du certain nombre de largeurs de bits de données différentes entrée dans la première pluralité d'emplacements de bits, et
regrouper des données provenant de la première pluralité d'emplacements de bits dans la deuxième pluralité d'emplacements de bits.

10. Procédé (700) selon la revendication 9, comprenant en outre :
le stockage des groupes de bits (328) dans un dispositif mémoire, dans lequel la deuxième pluralité d'emplacements de bits est contenue dans un dispositif mémoire.

11. Procédé (700) selon la revendication 10, dans lequel le nombre de bits dans un groupe de bits correspond à une taille de mot de données de mémoire du dispositif mémoire.

12. Procédé (700) selon la revendication 9, dans lequel le réseau de regroupement de bits fixe (208) comprend une partie d'un parmi un réseau de chemin de données de calcul ou un chemin de données de mémoire.

13. Procédé (700) selon la revendication 9, dans lequel le nombre prédéterminé de bits de données dans la première pluralité d'emplacements de bits sont reçus en provenance d'une unité SIMD, ayant un certain nombre de canaux.

14. Procédé (700) selon la revendication 13, dans lequel chaque groupe de bits a une taille qui est un multiple d'un nombre de canaux de l'unité SMID.

15. Procédé (700) selon la revendication 9, comprenant en outre une opération de dégroupage dans laquelle des groupes de bits dans la pluralité de deuxièmes emplacements de bits sont dégroupés dans la pluralité de premiers emplacements de bits par une opération inverse du réseau de regroupement de bits fixe.
